# Europäisches Patentamt

## European Patent Office

## Office européen des brevets

(19)

(11) Publication number: **0 118 433**
**B1**

(12) **EUROPEAN PATENT SPECIFICATION**

(45) Date of publication of patent specification: **23.12.87**

(21) Application number: **82902970.1**

(22) Date of filing: **14.09.82**

(86) International application number:
**PCT/US82/01241**

(87) International publication number:
**WO 84/01086 29.03.84 Gazette 84/09**

(51) Int. Cl.⁴: **A 01 D 75/20**

(54) **CONTROL LEVER MOUNTING.**

(43) Date of publication of application:
**19.09.84 Bulletin 84/38**

(45) Publication of the grant of the patent:
**23.12.87 Bulletin 87/52**

(84) Designated Contracting States:
**FR**

(56) References cited:
**US-A-1 397 779**
**US-A-3 800 618**
**US-A-4 016 684**
**US-A-4 267 747**
**US-A-4 309 862**
**US-A-4 327 539**
**US-A-4 335 566**
**US-A-4 362 228**

(73) Proprietor: **MTD PRODUCTS INC.**
**5965 Grafton Road P.O.Box 36900**
**Cleveland, OH 44136 (US)**

(72) Inventor: **PLAMPER, Gerhard, R.**
**5620 Sleepy Hollow Road**
**Valley City, OH 44280 (US)**
Inventor: **KAESGEN, Hartmut**
**548 Barrett Road**
**Berea, OH 44017 (US)**
Inventor: **RUSH, Robert, W., Jr.**
**42156 Emerson Court**
**Elyria, OH 44035 (US)**

(74) Representative: **Holdcroft, James Gerald, Dr.**
**et al**
**Graham Watt & Co. Riverhead**
**Sevenoaks Kent TN13 2BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Field to Which Invention Relates

Our invention relates to such engine-driven appliances as lawn mowers, tillers, and the like in which a clutch mechanism or a clutch-brake mechanism is inter-connected with the engine and the working part of the appliance, such as a rotary blade of a mower or the tines of a tiller, for the control of the working part, and wherein the clutch or clutch-brake mechanism is controlled by a dead-man control lever mounted on the handle of the appliance in a position to be grasped by the operator of the appliance.

### Background Art of the Invention

The related art insofar as known to the Applicants is that found in rotary lawn mowers wherein a dead-man control lever is pivotally carried on the handle of the mower and wherein a throttle lever is also mounted on the handle of the mower within reach of the operator walking behind the mower holding the handle. Such an arrangement is found in U.S. Patent Specification No. 4,309,862.

U.S. 1,397,779 is also relevant prior art in that it shows a control lever for a power press secured against accidental movement by a bolt which extends into the path of movement of the control lever.

### Statement of the Invention

It is an object of our invention to provide a mounting member which carries both the pivotal mounting of a throttle member and of a dead-man control lever for ready reach by the operator.

Another object is to prevent the accidental or unpremeditated movement of the dead-man control lever to a position wherein the clutch or clutch-brake mechanism would be operated to permit the working part, such as a mower blade, to start to rotate before intended.

Other objects and advantages may be observed from the following description of the invention in conjunction with the drawings.

### Figures of the Drawings

FIGURE 1 is a plan view of our novel mounting and associated parts mounted on a handle of a lawn mower, showing some internal portions in broken lines;

FIGURE 2 is a side view of the mounting shown in FIGURE 1, showing some internal portions in broken lines;

FIGURE 3 is a detailed drawing of the mounting box to which the throttle lever is pivotally carried, and shows the position of the parts when the mounting box is mounted on one of the two side arms of the handle;

FIGURE 4 is a view similar to that of FIGURE 3 but illustrating the positions of the parts when the mounting box is mounted on the other of the two side arms of the handle; and

FIGURE 5 is a cross-sectional view through the line 5—5 of FIGURE 4.

## Description

The present invention is here described in connection with its use as applied to a rotary type lawn mower having an engine driven rotary blade, the blade being operated by the engine through a clutch-brake mechanism which assures termination of rotation of the blade when the clutch-brake mechanism is actuated by a dead-man control upon the dead-man control being no longer grasped by the operator. The invention is also useful in connection with other appliances or machines having an engine driven working element. The best and preferred embodiment of the invention, as presently known to the inventor, is as herein described.

The particular lawm mower used by way of example in this case has a handle extending rearwardly and upwardly from the mower proper (not shown). The handle 11 is of the U-shape type in which two side bars are joined in the rear by a cross-bar ordinarily grasped by the operator while walking behind the mower and controlling the movements of the same. In the drawing only one side bar 11A and a half of the cross-bar 11B are shown, it being understood that twin parts not shown are joined to the side bar and cross-bar illustrated to comprise the usual and well known U-shaped handle 11.

A mounting member 12, in the form of a molded plastic box, of two parts embracing the side bar 11A on one side of the handle 11, is secured to the handle side bar 11A. This is done by a pivot portion extending from each of the mating two parts of the box 12 in alignment with each other and through a transverse hole in the handle side bar 11A to form the pivot mounting 14. The screw bolt through the pivot mounting 14 and the said transverse hole holds the two parts of the box 12 together and securely to the handle side bar 11A.

A throttle lever 13 is pivotally mounted on pivot mounting 14 so as to be positioned to be manually swung forwardly and rearwardly. A handle 13A of plastic material is mounted on the free outer end of the throttle member 13. A cable or wire 16 is connected at one of its ends to the throttle lever 13 and at the other of its ends is connected to the controls of the engine (not shown) whereby the speed and stopping of the engine is manipulated by the throttle lever 13. To accommodate for different types of engine controls used by different engine manufacturers, it is provided that the cable 15 may be attached to the throttle lever near its upper free end of illustrated, or alternatively, near its lower free end. This will assure that in all cases maximum speed is obtained by moving the handle 13A forwardly and lesser speed is obtained by moving the handle 13A rearwardly, that is in an opposite direction.

A sheath or protective casing 16 around the cable 15 is secured firmly to the mounting box 12 by a clamp 17 which is tightened by a bolt 18. The cable 15 slides longitudinally through the sheath 16.

A long slot 19 extends longitudinally through a wall of the mounting box 12 on one side thereof for accommodating the swinging of the throttle lever 13. A label marking the degrees of speed may be applied to the wall of the mounting box 12 adjacent the slot 19 for indicating to the operator the markings for the degrees of speed.

A "dead-man" control lever is mounted on the handle 11 in a position to be grasped by the operator while holding the cross bar 11B of the handle 11. As is well known, a dead-man control has the function of permitting an appliance or machine to continue to operate in its intended and usual manner when the operator continues to grasp the dead-man control. However, the dead-man control is intended and designed to terminate such operation of the appliance or machine in its intended and usual manner, as for example to terminate the rotation of the blade of a rotary lawn mower, when the dead-man control is released by the operator.

The dead-man control lever denoted by the reference character 22 is of a U-shape form having two side arms 22A (of which only one is shown) joined at the rear by a cross-arm 22B (of which only a half is shown). The cross-arm 22B is generally co-extensive with the handle cross-bar 11B and is adapted to lie shown adjacent to it as shown in full lines in the drawings. The side arms 22A are disposed in upright planes generally coinciding with the side bars 11A of the handle. The side arms 22A provide that the dead-man control lever may be swung to perform the function of the dead-man control.

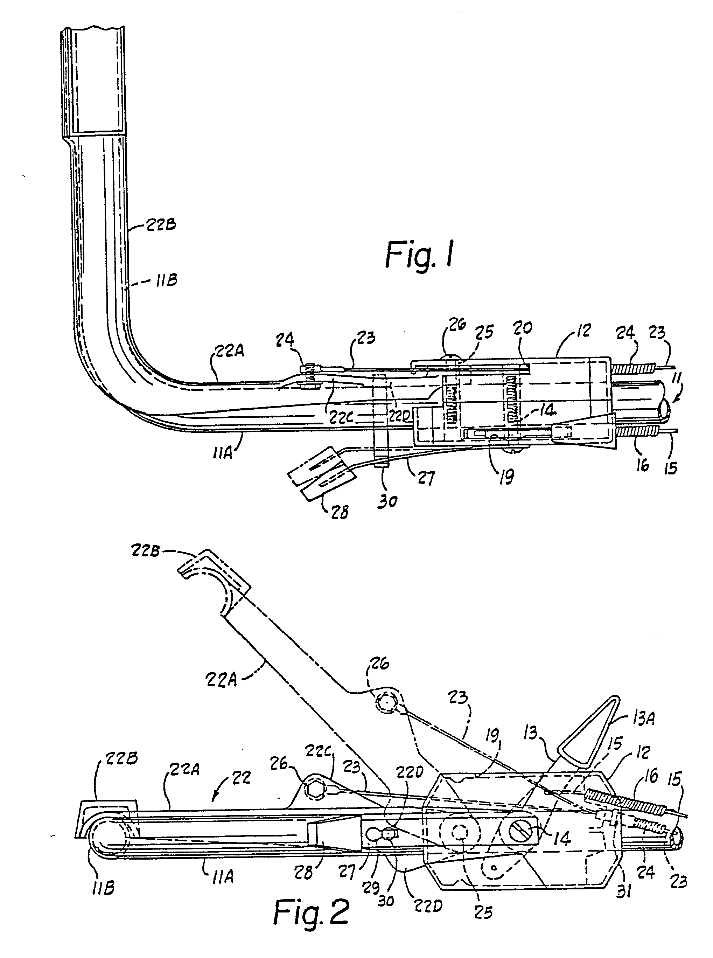

The forward free ends of the side arms 22A are connected by a pivot connection 25 to the mounting box 12 and to the handle side bar 11A, the pivot connection 25 extending through aligned openings in them. The side arms 22A (of which only one is shown) may swing on the pivot connection 25 in an upright plane parallel to the handle side bar 11A between the lowered position shown in full lines in FIGURE 2, and the upper position shown in broken lines in FIGURE 2.

The side arm 22A has a portion 22C extending upwardly therefrom as shown. This portion 22C provides a location and mounting for the connection 26 on the portion 22C for the connection 26 securing cable or wire 23 to the side arm 22A. This cable 23 leads through a sheath or cover 24 (clamped to mounting box 12), the cable 23 being movable longitudinally through a fair lead 31 secured to the mounting box 12.

The cable 23 is connected at its other end to the clutch-brake mechanism (not shown) associated with the engine. The mechanism imparts a resilient pull on the cable 23 so that the cable is biased so as to pull or draw the side arm 22A to swing upwardly so that the dead-man control is biased to assume the raised position B shown in FIGURE 2.

Upon the operator pressing downwardly on the cross arm 22B to press it towards the handle cross-bar 11B, and grasping both cross-bar 11B and cross arm 22B in the operator's hand, the dead-man control is moved to, and held in, the position shown in FIGURE 1 and shown in full lines in FIGURE 2. In this position the clutch-brake mechanism is actuated through cable 23 (interconnection portion 22C and the mechanism) to place the mechanism in a clutched and un-braked condition. Upon release by the operator of the cross-arm 22B the dead-man control swings upwardly under the biased pull of cable 23 to the position B shown in broken lines in FIGURE 2. In this situation, the clutch-brake mechanism is in an unclutched and braked condition whereby movement of the driven working part, such as the blade of a lawn mower, is terminated and the working part is still.

To prevent the dead-man control from accidentally and unintentionally moving from the raised position B to the lowered position A, there is provided a locking arrangement which must be first actuated before the side arm 22A may move downwardly from its raised position B.

A leaf spring 27 has its forward end firmly anchored by screw bolt 20 to a side of mounting box 12. The bias of spring 27 is such as to resiliently urge its opposite free end toward the handle side arm 11A and to the position shown in FIGURES 1 and 2. A plastic handle 28 is secured to the end of leaf spring 27 as shown, and the end portion of leaf spring is bent or angled outwardly as shown for readily grasping the handle 28.

Near the outer or free end of leaf spring 27 it is provided with a "key-hole" 29 and in this key-hole 29 there is so secured a locking bolt 30 so that the bolt 30 swings with the flexing swing of leaf spring 27. The bolt extends substantially normal to the plane of the leaf spring 27 through a transverse opening provided in handle side arm 11A to the other side of the side arm 11A. The length of the bolt 30 is such that upon the leaf spring 27 being located close to, and against, the side of the mounting box 12, such as shown in FIGURES 1 and 2, then the bolt extends out from the handle side arm 11A on the other side into the path of dead-man control side arm 22A as it may swing in an upright plane on pivot pin 25.

The side arm 22A has a downwardly extending portion 22D so formed as to provide an abutment which engages the bolt 30 when it protrudes out from the handle side arm 11A into the downwardly swinging path of side arm 22A. Thus, when the dead-man control is in raised position B shown in FIGURE 2, it cannot be lowered because of the interference of bolt 30 engaging the lower edge of downwardly extending portion 22D. The dead-man control cannot accidentally or unintentionally be moved to actuate the clutch-brake mechanism because of this safety interlocking arrangement.

When it is desired to overcome this locking arrangement and to permit the dead-man control lever to be depressed to its lowered position A shown in FIGURES 1 and 2, the operator manually grasps the handle 28 on the leaf spring 27 and flexes the leaf spring outwardly to draw the bolt 30 back sufficiently to clear the lower edge of the downwardly extending portion 22D and thus to remove the interference to the downwardly swinging of the dead-man control lever.

Upon the dead-man control side arm 22A being depressed to where the handle cross bar 11B and the cross arm 22B are disposed close together and clasped in the hand of the operator, the end of bolt 30 engages the side surface of downwardly protruding portion 22D above the level of its lower edge. The bias of leaf spring 27 is such as to urge the bolt 30 in engagement with the side surface of portion 22D and when the dead-man control is released to where the dead-man control side arm 22A is in its raised position B, the bolt 30 under the bias of spring 27 immediately and automatically moves into its locking position under the lower edge of portion 22D and there locks the parts in the raised position B.

As will be seen, an efficient mounting is provided for both the throttle lever and the dead-arm control lever, and a safety locking arrangement is provided against accidental and unintentional actuation of the clutch-brake mechanism by movement of the dead-man control.

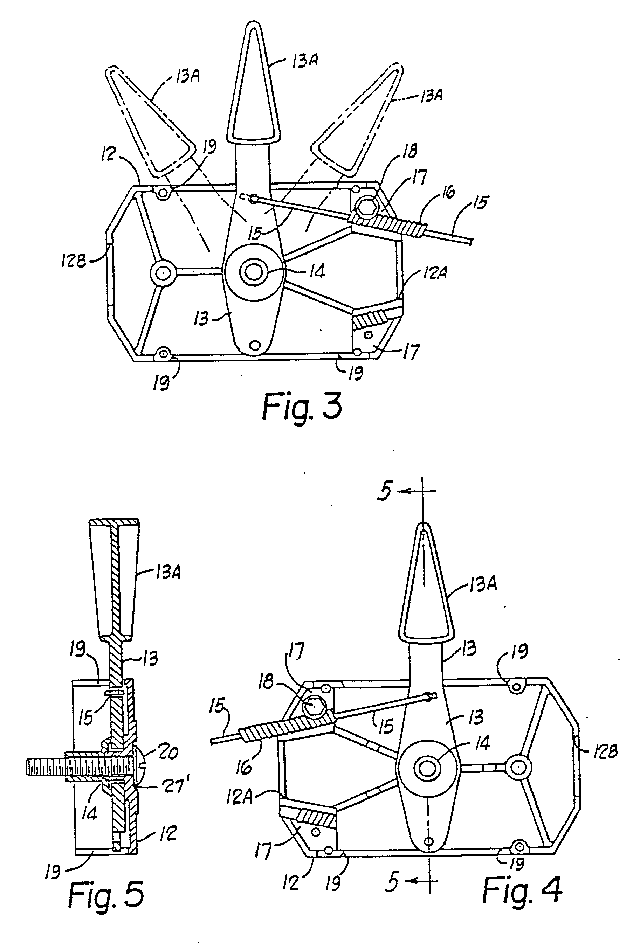

By reason of the structure and arrangement of parts of this novel mounting, the mounting may be applied to the right side handle part or to the left side handle part of handles having two such parts extending back rearwardly generally parallel to each other. In the case of some engines utilized on the appliance, the controls disposed on the engine are such that it is more convenient and efficient to have the control lever mounting secured to the left side handle part as shown in FIGURE 3. In other cases the disposition of the controls mounted on the particular engine utilized is such that it is more convenient and efficient to have the novel control lever secured to the right side handle part as illustrated in FIGURE 4.

**Claims**

1. A mounting for a dead-man control lever of an engine-powered appliance having a handle (11A) extending therefrom and having a clutch mechanism associated with the engine, said dead-man control lever having an end portion disposed in a plane generally parallel to said handle, a pivot mounting (25) carried by said handle and pivotally mounting said dead-man control lever to the handle to permit the said end portion of the dead-man control lever to swing in said plane, said dead-man control lever being adapted to control the operation of said clutch mechanism upon movement of the dead-man control lever between a first position and a second position, and a locking member carried by the said handle in the region of said pivot mounting for interfering with movement of the control lever from the second position to the first, characterised by said locking member including a bolt-carrying member (27) and a bolt (30) carried thereby, said bolt-carrying member being biased toward the said plane in which the dead-man control lever may swing, said bolt (30) protruding from the bolt-carrying member to extend across said plane to interfere with said dead-man control lever in swinging toward the first position, the bolt-carrying member being manually movable to withdraw said bolt from said plane to clear the dead-man control lever and to permit it to swing from the second position of said positions to said first position, the bolt-carrying member (27) comprising a leaf spring secured at one end along side the handle and biased to swing at its other end toward said plane, the other end (28) of the leaf spring being disposed for ready manual grasping of the same to move the leaf spring against the bias thereof away from said handle, and said bolt (30) being interlocked with said leaf spring between its said opposite ends to protrude normal to the plane of said leaf spring.

2. A mounting as claimed in claim 1, characterised in that said dead-man control lever is provided with anchoring means (26) at a distance from said pivot mounting (25) for attachment to a cable (23) connectable to said clutch mechanism for operating the same, said dead-man control lever being provided with an abutting portion at a distance from said pivot mounting in a position to abut said bolt upon its protrusion into said plane into the path of the dead-man control lever.

3. A mounting as claimed in claim 1, characterised by a mounting block secured to said handle, and to which said pivot mounting for the dead-man control lever is secured, and to which said bolt-carrying member is secured.

4. A mounting as claimed in claim 3, characterised in that a throttle lever (13) for controlling the said engine is pivotally carried by said mounting block.

5. A mounting as claimed in claim 3, characterised in that said mounting block is apertured to accommodate the handle extending therethrough, and includes open space for accommodating the dead-man control lever extending from the mounting block.

6. A mounting as claimed in claim 1, for the controls of an engine mower, characterised in that the mower handle has a rearwardly disposed bar (11B) for being grasped by the operator, a driven working part such as a mower blade adapted to be driven by the appliance engine, said clutch mechanism clutching and de-clutching the connection between the engine and driven working part, the dead-man control lever being adapted to be operable by the operator grasping the rearwardly disposed bar of said handle, the dead-man control lever controlling the operation of said clutch mechanism through a cable interconnecting the clutch mechanism and the dead-man control lever, and in that a throttle lever (13) is provided for controlling the operation of said engine through a cable interconnecting the throttle lever and the said engine, a mounting member (12) is provided secured to said handle within reach of the operator, said mounting member including a first pivot pin member (14) extending into said handle, and providing a pivotal mounting for said throttle lever, the mounting member having a space (19) provided therein for permitting the throttle member to swing within a range between spaced stops provided by the mounting member, the said mounting member including a second pivot pin (25) extending into said handle at a distance along the handle from the said first pivot pin and providing said pivot mounting for said dead-man control lever, the mounting member having a space provided therein for permitting the said dead-man control lever to extend from the mounting member and to swing in an upright plane and along the said mounting member.

7. A mounting as claimed in claim 6, characterised in that said leaf spring has an angular portion at its other end and a handle on said angular portion to provide for ready manual flexing of the leaf spring to move the bolt carried thereby away from said upright plane and out of the path of said dead-man control lever.

8. A mounting as claimed in claim 6, characterised in that said bolt is extended through an opening in the handle and transversely thereof from the leaf spring to the path of said dead-man control lever.

**Patentansprüche**

1. Befestigungseinrichtung für einen Sicherheitskontrollhebel einer motorbetriebenen Gerätschaft mit einem sich von dieser forterstreckenden Handgriff (11A) und mit einem dem Motor zugeordneten Kupplungsmechanismus, wobei der Sicherheitskontrollhebel mit einem Endbereich in einer im wesentlichen zum Handgriff parallelen Ebene angeordnet ist, eine Schwenkeinrichtung (25) von dem Handgriff getragen ist und den Sicherheitskontrollhebel am Handgriff für eine Schwenkbewegung des Endbereichs des Sicherheitskontrollhebels in der genannten Ebene schwenkbar abstützt, der Betrieb des Kupplungsmechanismus durch den Sicherheitskontrollhebel bei dessen Bewegung zwischen einer ersten und einer zweiten Stellung kontrollierbar ist und ein Sperrglied vom Handgriff im Bereich der Schwenkeinrichtung für ein Eingreifen in die Bewegung des Kontrollhebels von der zweiten in die erste Stellung abgestützt ist, dadurch gekennzeichnet, daß das Sperrglied ein Bolzentragteil (27) und einen von diesem getragenen Bolzen (30) aufweist, das Bolzentragteil in Richtung der Ebene, in der der Sicherheitskontrollhebel verschwenken kann, druckbeaufschlagt ist, der Bolzen (30) vom Bolzentragteil vorsteht, um sich quer zu der genannten Ebene für einen Eingriff mit dem Sicherheitskontrollhebel beim Verschwenken zur ersten Stellung hin zu erstrecken, das Bolzentragteil zum Zurückziehen des Bolzens aus der genannten Ebene für ein Freigeben des Sicherheitskontrollhebels und zur Ermöglichung seiner Schwenkbewegung aus der zweiten der genannten Stellungen in die erste Stellung manuell bewegbar ist, das Bolzentragteil (27) ein Federblatt umfaßt, das an einem Ende längsseits des Handgriffs befestigt und für eine Schwenkbewegung an seinem anderen Ende zu der genannten Ebene hin vorgespannt ist, wobei das andere Ende (28) des Federblattes eine Anordnung zu seinem leichten manuellen Erfassen für eine Bewegung des Federblattes entgegen dessen Vorspannung in vom Handgriff fortweisender Richtung aufweist, und daß der Bolzen (30) mit dem Federblatt zwischen dessen gegenüberliegenden Enden für ein zur Ebene des Federblattes senkrechtes Vorspringen verblockt ist.

2. Befestigungseinrichtung nach Anspruch 1, dadurch gekennzeichnet, daß der Sicherheitskontrollhebel mit einer Verankerungseinrichtung (26) in einem Abstand von der Schwenkeinrichtung (25) zur Anbringung eines Kabels (23) versehen ist, das mit dem Kupplungsmechanismus für dessen Betätigung verbindbar ist, und daß der Sicherheitskontrollhebel mit einem Widerlager in einem Abstand von der Schwenkeinrichtung in einer Position für eine Anlage des Bolzens bei seinem Vorspringen in die genannte Ebene in den Weg des Sicherheitskontrollhebels versehen ist.

3. Befestigungseinrichtung nach Anspruch 1, gekennzeichnet durch einen am Handgriff festgelegten Befestigungsblock, an dem die Schwenkeinrichtung für den Sicherheitskontrollhebel festgelegt ist und an dem das Bolzentragteil festgelegt ist.

4. Befestigungseinrichtung nach Anspruch 3, dadurch gekennzeichnet, daß ein Drosselhebel (13) zum Steuern des Motors schwenkbar vom Befestigungsblock abgestützt ist.

5. Befestigungseinrichtung nach Anspruch 3, dadurch gekennzeichnet, daß der Befestigungsblock mit einer Öffnung zur Aufnahme des sich durch diese hindurcherstreckenden Handgriffs versehen ist und einen offenen Raum zur Aufnahme des sich vom Befestigungsblock forterstreckenden Sicherheitskontrollhebels aufweist.

6. Befestigungseinrichtung nach Anspruch 1 für die Steuerung eines motorbetriebenen Mähers, dadurch gekennzeichnet, daß der Mäherhandgriff eine nach hinten angeordnete Stange (11B) für ein Ergreifen durch die Bedienungsperson aufweist, ein angetriebenes Arbeitsteil wie ein Mähmesser von dem Gerätemotor antreibbar ist, der Kupplungsmechanismus die Verbindung zwischen dem Motor und dem angetriebenen Arbeitsteil ein- und auskuppelt, der Sicherheitskontrollhebel dadurch betätigbar ist, daß die Bedienungsperson die nach hinten angeordnete Stange des Handgriffs ergreift, der Sicherheitskontrollhebel die Betätigung des Kupplungsmechanismus durch ein den Kupplungsmechanismus und den Sicherheitskontrollhebel verbindendes Kabel steuert und daß ein Drosselhebel (13) zur Steuerung des Betriebs des Motors durch ein den Drosselhebel und den Motor verbindendes Kabel vorgesehen ist, ein Befestigungsteil (12) vorgesehen ist, das am Handgriff innerhalb der Reichweite der Bedienungsperson befestigt ist, das Befestigungsteil ein erstes Drehzapfenteil (14) aufweist, das sich in den Handgriff hineinerstreckt und eine Schwenkeinrichtung für den Drosselhebel bildet, das Befestigungsteil einen in diesem vorgesehen Raum (19) zur Ermöglichung einer Schwenkbewegung des Drosselglieds innerhalb eines Bereichs zwischen am Befestigungsteil vorgesehenen beabstandeten Anschlägen besitzt, das Befestigungsteil einen zweiten Drehzapfen (25) aufweist, der sich in den Handgriff in einem Abstand entlängs dem Handgriff von dem ersten Drehzapfen hineinerstreckt und die Schwenkeinrichtung für den Sicherheitskontrollhebel bildet und daß das Befestigungsteil einen in diesem vorgesehenen Raum zur Ermöglichung einer vom Befestigungsteil ausgehenden Erstreckung und einer Schwenkbewegung des Sicherheitskontrollhebels in einer aufrechten Ebene und entlang dem Befestigungsteil aufweist.

7. Befestigungseinrichtung nach Anspruch 6, dadurch gekennzeichnet, daß das Federblatt einen abgewinkelten Bereich an seinem anderen Ende und einen Handgriff an dem abgewinkelten Bereich für ein leichtes manuelles Biegen des Federblattes aufweist, um den von diesem abgestützten Bolzen aus der aufrechten Ebene fort und aus dem Weg des Sicherheitskontrollhebels herauszubewegen.

8. Befestigungseinrichtung nach Anspruch 6, dadurch gekennzeichnet, daß sich der Bolzen durch eine Öffnung im Handgriff und quer zu diesem vom Federblatt zum Weg des Sicherheitskontrollhebels erstreckt.

**Revendications**

1. Assemblage pour levier de commande de type homme-mort d'un engin à moteur ayant une extension en forme de bras (11A) et comportant un mécanisme d'embrayage associé au moteur, ledit levier de commande de type homme-mort ayant une de ses extrémités disposée dans un plan généralement parallèle audit bras, une articulation à pivot (25) portée par ledit bras et fixant de manière pivotante ledit levier de commande de type homme-mort au bras afin de permettre à ladite extrémité du levier de commande de type homme-mort de pivoter dans ledit plan, ledit levier de commande de type homme-mort étant adapté pour commander le fonctionnement dudit mécanisme d'embrayage lors du déplacement du levier de commande de type homme-mort entre une première position et une seconde position, et un élément de verrouillage porté par ledit bras à proximité de ladite articulation à pivot destiné à interférer avec le déplacement du levier de commande de la seconde position à la première, caractérisé en ce que ledit élément de verrouillage comprend un élément (27) porte-boulon et un boulon (30) porté par ce dernier, ledit élément porte-boulons étant placé en biais par rapport audit plan dans lequel peut pivoter le levier de commande de type homme-mort, ledit boulon (30) saillant dudit élément porte-boulon et traversant ledit plan pour interférer avec ledit levier de commande de type homme-mort en pivotant vers la première position, l'élément porte-boulon étant manoeuvrable à la main pour retirer ledit boulon dudit plan afin de dégager le levier de commande de type homme-mort et lui permettre de pivoter de la seconde desdites positions à ladite première position, l'élément (27) porte-boulon comportant un ressort à lames fixé à une de ses extrémités le long du bras et placé en biais pour pivoter à son autre extrémité vers ledit plan, l'autre extrémité (28) du ressort à lames étant disposée de manière à autoriser sa préhension immédiate afin d'amener le ressort à lames contre le biais en s'éloignant dudit bras, et ledit boulon (30) s'enclenchant avec ledit ressort à lames entre ses extrémités opposées pour saillir perpendiculairement au plan dudit ressort à lames.

2. Assemblage selon la revendication 1, caractérisé en ce que ledit levier de commande de type homme-mort comprend des moyens d'ancrage (26) situés à une certaine distance de l'articulation à pivot (25) pour l'attacher à un câble (23) reliable audit mécanisme d'embrayage pour le faire fonctionner, ledit levier de commande de type homme-mort comprenant une partie jointive située à une certaine distance de ladite articulation à pivot dans une position attenante audit boulon lorsqu'il saille dans ledit plan dans le trajet du levier de commande de type homme-mort.

3. Assemblage selon la revendication 1, caractérisé par un bloc de montage fixé audit bras et auquel sont fixés ladite articulation à pivot pour le levier de commande de type homme-mort et ledit élément porte-boulon.

4. Assemblage selon la revendication 3, caractérisé en ce qu'une manette (13) de commande des gaz pour contrôler ledit moteur est montée pivotante sur ledit bloc de montage.

5. Assemblage selon la revendication 3, caractérisé en ce que ledit bloc de montage est muni d'ouvertures pour être adapté au bras le traversant, et comprend un espace ouvert pour le levier de commande de type homme-mort le traversant.

6. Assemblage selon la revendication 1, pour le contrôle d'une tondeuse à moteur, caractérisé en ce que le bras de la tondeuse possède une barre (11B) disposée vers l'arrière destinée à être empoignée par l'utilisateur, une partie utile commandée, comme par exemple une lame de tondeuse appropriée pour être entraînée par le moteur de l'engin, ledit mécanisme d'embrayage embrayant et débrayant la connexion entre le moteur et la partie utile commandée, le levier de commande de type homme-mort étant adapté pour être actionné par l'utilisateur saisissant la barre dudit bras située en arrière, le levier de commande de type homme-mort commandant le fonctionnement dudit mécanisme d'embrayage par l'intermédiaire d'un câble les reliant, et caractérisé en ce qu'il comprend un levier (13) de commande des gaz pour contrôler le fonctionnement dudit moteur par l'intermédiaire d'un câble reliant le levier de commande des gaz et ledit moteur, un élément d'assemblage (12) fixé audit bras à portée de l'utilisateur, ledit élément d'assemblage comprenant un premier élément (14) pivot s'étendant dans ledit bras, et offrant un assemblage pivotant audit levier de commande des gaz, l'élément d'assemblage possédant un évidement (19) permettant à l'élément de commande des gaz de pivoter dans l'espace compris entre des butoirs espacés créés par l'élément d'assemblage, ledit élément de d'assemblage comportant un second pivot (25) traversant ledit bras à une certaine distance sur le bras dudit premier pivot et assujettissant ledit assemblage à pivot audit levier de commande de type homme mort, l'élément d'assemblage possédant un évidement pour permettre audit levier de commande de type homme-mort de s'étendre à partir de l'élément d'assemblage et de pivoter dans un plan vertical et le long dudit élément d'assemblage.

7. Assemblage selon la revendication 6, caractérisé en ce que ledit ressort à lames possède une partie angulaire à son autre extrémité et une poignée sur ladite partie angulaire pour permettre l'inclinaison manuelle du ressort à lames pour déplacer le boulon qui est ainsi éloigne dudit plan vertical et du trajet du levier de commande de type homme-mort.

8. Assemblage selon la revendication 6, caractérisé en ce que ledit boulon traverse une ouverture dans le bras transversalement du ressort à lames au trajet dudit levier de commande de type homme-mort.

0 118 433

Fig. 1

Fig. 2

1

0 118 433

Fig. 3

Fig. 5

Fig. 4

2